# EUROPEAN PATENT SPECIFICATION

(11) **EP 2 147 291 B1**
(45) Date of publication and mention of the grant of the patent: **07.11.2012**
(21) Application number: 08737045.8
(22) Date of filing: 18.04.2008
(51) Int. Cl.: G01N 1/42, G01N 1/28

(54) **APPARATUS AND METHOD FOR THE PREPARATION OF FLUID BEARING MATERIALS FOR SURFACE ANALYSIS IN A VACUUM**
VORRICHTUNG UND VERFAHREN ZUR HERSTELLUNG FLÜSSIGKEITSTRAGENDER MATERIALIEN FÜR DIE OBERFLÄCHENANALYSE IN EINEM VAKUUM
APPAREIL ET PROCEDE POUR LA PREPARATION DE MATERIAUX PORTEURS FLUIDES POUR UNE ANALYSE DE SURFACE SOUS VIDE

(30) Priority: 19.04.2007 GB 0707594
(43) Date of publication of application: 27.01.2010
(73) Proprietor: Ionoptika Limited, Hants SO53 4NF (GB)
(72) Inventor: BLENKINSOPP, Paul, William, Miles, Hants SO18 6TL (GB); BARBER, Andrew, Mark, Hants S053 4LW (GB)
(74) Representative: Bibby, William Mark
(86) International application number: PCT/GB2008/001386
(87) International publication number: WO 2008/129279

(56) References cited:
- M.V. NERMUT ET AL: JOURNAL OF MICROSCOPY, vol. 110(2), 1977, pages 121-132, XP008094876
- U.B. SLEYTR ET AL: JOURNAL OF MICROSCOPY, vol. 101(2), 1974, XP008094943
- M.J. WILKINSON ET AL: JOURNAL OF MICROSCOPY, vol. 119(2), 1980, pages 249-255, XP008094875
- U.B. SLEYTR ET AL: JOURNAL OF MICROSCOPY, vol. 111(1), 1977, pages 77-100, XP008094874
- C. STOLINSKI: MICRON, vol. 8, 1977, pages 87-111, XP022562176

## Description

### Field of the invention

This invention relates to an apparatus and method that facilitates the surface and near-surface analysis of fluid bearing materials such as biological and organic materials where the fluid content needs to be frozen to prevent evaporation of the fluid in the vacuum system of the analyser prior to, during and after the analysis process. Surface ice formation and surface contamination is also minimised.

### Background of the invention

A variety of surface and near surface analysis techniques are widely used to identify chemical structure and composition on or just below the surface in solid inorganic materials. These techniques are typically highly dependent on surface condition and cleanliness and so the condition of the surface of sample to be analysed is critical to obtaining optimal results. Typically, a surface analytical technique comprise of a probe beam or primary radiation comprising charged particles, neutral particles or photons which acts so as to stimulate the surface or near surface to emit a secondary emission or radiation in the form of charged particles, neutral particles or electromagnetic radiation of which the mass, energy, wavelength, intensity, dispersion or any combination thereof gives a measure of a quantifiable parameter of the sample. Such techniques can include Secondary Ion Mass Spectrometry (SIMS), in which the sample is bombarded by a beam of ions to dislodge secondary ions from the surface, X-ray Photoelectron Spectroscopy (XPS), in which electrons are ejected from a sample by incident x-rays and measurement is made of the electrons' energy spectra, and Auger Electron Spectroscopy (AES), in which measurement is made of Auger electrons' energy spectra.

Because of the surface specificity of surface analytical techniques, it is usually a requirement that the analysis process takes place in an Ultra High Vacuum (UHV) environment, normally in the range of 1e-6 mbar to 1e-11 mbar, to prevent previously cleaned surfaces from being contaminated on the surface by gas absorption and particulates. The analysis of many solid materials such as most metals, alloys, polymers, ceramics and semiconductors is now relatively straightforward as the samples can be surface cleaned by a number of established techniques. This cleaning of the sample takes place either prior to the sample being placed in the vacuum, under vacuum in the analysis chamber or whilst in a secondary or sample preparation chamber under vacuum which is attached to the high vacuum analysis chamber. Such sample-preparation techniques are well known, are accepted practice for most solid materials, are well understood and relatively inexpensive to implement. Additionally, solid samples typically do not significantly outgas during the analysis, a process which can lead to the degradation of the sample and to contamination of the analysis chamber.

More recently, a great deal of interest has been shown in the analysis of biological samples, which typically have a relatively high fluid content, by the aforementioned surface analysis techniques, for studying the chemical composition of cells and the mapping the concentrations of these chemicals inside the cell in order to understand functionality. As a result, a great deal of effort has been made to find methods and techniques to undertake this type of analysis. The SIMS technique, in particular, has seen advances in the past few years which extend the potential of the technique from mere elemental identification into extensive imaging and chemical mapping of complex organic surfaces in both 2 and 3 dimensions (for example: Fletcher et al; Molecular depth profiling of organic and biological materials and Vickerman; Static SIMS - A Surface Mass Spectrometry for Organic Materials in Secondary Ion Mass Spectrometry).

In SIMS, a primary ion beam is incident on the sample surface and primary ion impacts cause secondary ions to be ejected from the surface. These can be captured and analysed in a mass spectrometer. With scanning of the primary beam, data from the mass spectrometer can be related to specific areas (pixels) on the surface to provide a mass spectrum for each pixel position creating a chemical image or map of the surface. Using atomic primary ions, it is very rare to see whole molecules or large fragments in the spectra, however, advances in cluster ion beam technology have substantially increased the mass range that can be measured using the SIMS technique and also the sensitivity of that measurement.

The use of cluster primary ions, such as fullerene molecular ions (e.g. C₆₀⁺), has made SIMS applicable to the analysis of biological and biochemical samples, subject to overcoming two problems in sample preparation: firstly, that of stopping vaporisation and outgassing into the vacuum system of the analysis instrument, and secondly, that of presenting a clean surface for analysis.

Unlike solid samples, biological samples in their native state are typically formed of at least 70% liquid which makes them not particularly conducive to analysis in vacuum systems due to the problems of evaporation or outgassing.

Outgassing is a process whereby the liquid, vapour or gas contained in a sample effectively evaporates form the sample at a highly accelerated rate when placed in a vacuum. This outgassing results in both changes to the structure, the chemical composition of the sample and can have a detrimental effect on the vacuum quality in the analyser making analysis difficult or almost impossible. In order to overcome these problems, the samples may be converted to a relatively rigid and solid form by rapidly freezing them. This greatly reduces the outgassing, provides a fixed surface and structure facilitating structurally related analysis and retains the chemical information thus making SIMS analysis a very powerful and practical tool.

Rapid freezing of samples for microscopy has been in use since well before the 1960's but the vast majority of analysis was carried out in near normal or normal atmospheric conditions. This rapid freezing is usually achieved using liquid nitrogen which has a boiling point of 77K. At these low temperatures, ice formation on the surface has always been a problem, but a simple cleaning by suction removal of ice crystals formed on the surface has often sufficed to make the technique viable for early analytical purposes. Where a cleaner surface is required, the sample is frozen between two microscope slides and then, once frozen, the slides are forcibly separated. This results in the sample being fractured along the path of least resistance which is hopefully through the sample and reveals features of interest for analysis.

The resultant surface exposed is clean and highly suited for surface analysis. This technique is known as freeze-fracturing. Alternatively, the sample can be cleaved by a blade exposing a clean surface, a process known as freeze-cleaving. A variety of specific techniques have been developed for optical microscopy, Scanning Electron Microscopy (SEM), Transmission Electron Microscopy (TEM) and Atomic Force Microscopy (AFM) (for example, Nakamoto et al.; In-Situ Observation of Freeze Fractured Red Blood Cell with High-Vacuum Low-Temperature Atomic Force Microscope).

With the development of powerful surface analytical techniques such as imaging and mapping SIMS and the growing interest in performing surface analysis on organic samples, simple adaptations of the freeze-fracture and freeze cleave techniques (for example as described by Moller at al.; Introduction of a cryosectioning ToF SIMS instrument for analysis of non-dehydrated biological samples), have been made to permit their use in vacuum systems. However, the surface cleanliness and vacuum required to carry out a surface analysis imposes a unique set of challenges not previously encountered.

The following description uses a SIMS instrument but can easily be extrapolated to any surface analytical technique requiring HV or UHV.

The primary problem encountered is that after freeze fracturing or freeze cleaving, any exposure of the frozen sample surface to the normal atmosphere leads to the creation of a thin layer of ice crystals on the surface in only a few seconds thereby rendering the sample effectively unusable for surface analysis.

One method is to assemble the frozen slides with the sample placed between them, mount them securely to a sample holder used in the SIMS analyser, perform a simple fracture in a dry gas environment and then rapidly transfer the sample to the insertion lock and onto a cold stage where the frozen condition is hopefully preserved. However, even dry gas contains sufficient moisture to cause the formation of ice crystals on the surface and the whole process is highly dependent on the operator's manual dexterity and speed in loading the sample into the vacuum to prevent the sample warming or excessive ice forming on the surface. In either case it is not suitable for surface analysis.

Alternatively, the frozen slide & sample assemblage is transferred to a cold stage in the instrument via an insertion lock and brought under vacuum. Once under vacuum, the slides can be prized apart manually using a movable probe (vacuum probe) through the vacuum wall, fracturing the sample. All of this must take place without any frosting of the sample or sample holder whatsoever. At the end of this procedure, the lower glass slide should remain in place with a new sample surface exposed for analysis. There is no mechanism for recovery of the top glass slide which is often subsequently lost, often dropping into the bottom of the insertion lock chamber from where recovery may be extremely difficult to achieve. Once removed from the cold stage, the portion of the sample still attached to this slide will then start to increase in temperature and outgas which can compromise the instrument vacuum. Further problems such as the fracture probe misalignment resulting in failure to fracture the sample or even the loss of both slides frequently occur. Additionally, contact with the probe can cause temperature variations and any failure to maintain the whole sample assembly uniformly at low temperature can result in spoilage of the sample. Finally, there is no guarantee that the lower slide will contain a surface suitable for analysis as the sample may facture along the interface with the lower slide and the majority of the sample may remain on the top slide which is then lost in the vacuum chamber.

M. V. NERMUT et al; Journal of Microscopy, Vol 110(2) 1977, p121-132 and U. B. Sleytr et al: Journal of Microscopy, Vol 101(2), 1974 both disclose freeze-fracture apparatus used in scanning electron microscopy. The apparatus includes a pair of hinged sample plates which can be separated, and caused to rotate with respect to each other, by the action of a coil spring incorporated within the hinge of the sample plates.

Any solution to these problems should be effective to provide a clean surface with low outgassing suitable for surface analysis, reliable, robust and be easy to implement by the end user.

The current invention overcomes all these limitations in both a novel and cost effective manner.

According to the present invention, the sample fracture is achieved by an automated mechanism built into the sample holder instead of using a manual method similar to those described above. The invention completely removes the probability of losing the sample, completely removes the problem of loss of the top slide by allowing it to be retained and available for analysis thereby removing the problem of which slide the sample adheres to. It also significantly improves control of the temperature of the whole sample and slide assembly and, through simpler and easier handling, reduces the possibility of frosting of the sample or sample slide during transfer into the vacuum.

According to the invention, there is provided an apparatus for the freeze-fracture and presentation for surface analysis in a SIMS instrument, in a vacuum, of clean surfaces from frozen fluid containing material, the apparatus comprising: a pair of sample plates joined by a hinge pin to form a hinge, said plates being so disposed as to be able to face each other and to be capable of rotating about said hinge pin with respect to each other; and support means for supporting said sample plates for insertion into a vacuum system; characterised in that said hinge is a floating hinge and the apparatus includes: a spring-loaded bar pivotally mounted on the support means, and release means mounted on the support means for releasably retaining the spring-loaded bar in a set position, the release means being triggerable, in use, from outside the vacuum system, whereby the release means is caused to push on a sample plate to mechanically prise the sample plates apart causing sample to fracture, and to release the spring-loaded bar from said set position, the spring-loaded bar, released from the set position by the release means, acting to cause the prised-apart samples plates to rotate with respect to each other through a predetermined rotation angle.

### Description of figures

An apparatus for the preparation and presentation of fluid bearing materials for surface analysis in a vacuum and accompanying method are now described by way of example of embodiments only and by reference to the accompanying drawings, of which
Figure 1 shows an isometric view of an example of a sample slide assembly
Figure 2 shows an isometric view of an example of a sample slide and sample holder assembly with operating mechanism
Figure 3 shows a cross section view of an example of a sample slide and sample holder assembly with operating mechanism
Figure 4 shows a schematic of the operation of the plates.

### Detailed description

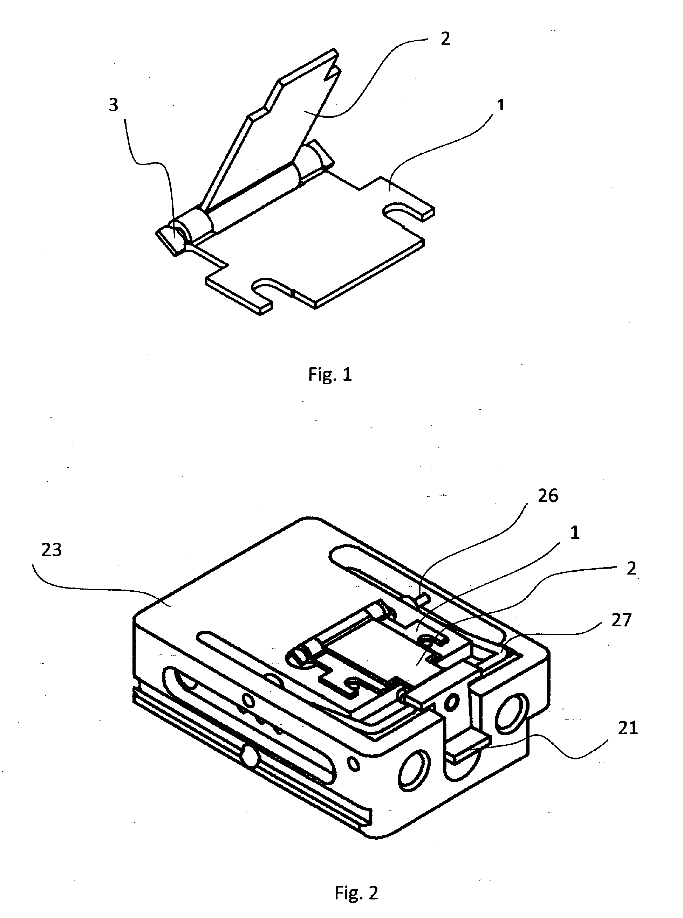

A preferred embodiment of the invention as related to the presentation of clean surfaces from biological sample such as tissue for SIMS analysis is shown in figures 1 to 4.

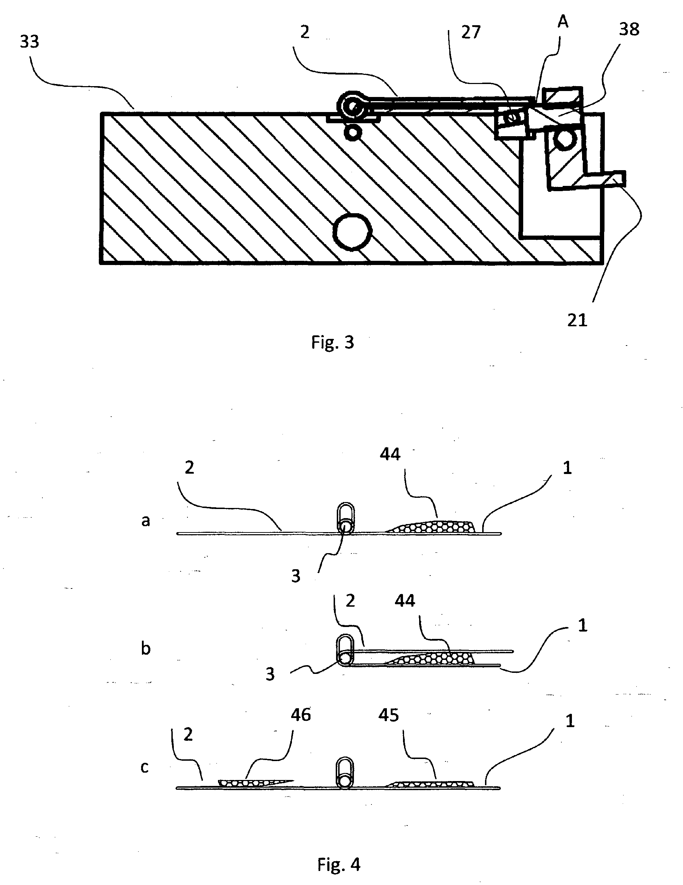

Fig. 1 shows a replacement for the two slides that were described above and Fig 4 a schematic of the operation of the plates. This comprises of two stainless steel metal plates (1) and (2) joined together by a hinge pin (3) said plates being so disposed as to allow rotation with respect to each other around the hinge pin (3). Alternatively the slide plates may be constructed from any suitable material such as any metal, glass, silicon or other material or combination thereof. The two plates and the pin form a floating hinge assembly whereby the plates can accommodate samples of varying thickness and of different thicknesses. The sample (44) would typically be a drop of liquid suspension or a piece of biological tissue which is placed on the surface of the lower plate (1) as shown in Fig 4a with the upper plate opened so that the upper side of the lower plate is accessible to mount the sample. The upper plate (2) is then rotated around the hinge pin (3) to be approximately facing the lower plate and the sample (44) is trapped between the lower side of the upper sample plate and the upper side of the lower sample plate as shown schematically in fig 4b. If required, a suitable spacer arrangement may be used to maintain a minimum sample thickness. At this point, if required, pressure to the plates may be applied to give, for example, exclusion of air and to ensure good contact of the sample with both plates. The hinge assembly, complete with trapped sample, is then transferred to a cryogenic bath (often liquid Nitrogen (LN2) or a "slush" of ice and LN2) which already contains the sample holder assembly. Once the sample has frozen completely the upper plate should be bonded to the lower plate by the frozen sample. Whilst still keeping both the hinge assembly and the sample plate assemblage submerged in the coolant, the lower plate of the hinge is clamped to the holder using screws or clips. This procedure can either take place within a dry atmosphere glove box or, if outside of the dry atmosphere, the assemblage is kept cooled in the cryogenic bath while the bath is transferred to a dry atmosphere glove box which is mounted around the entry lock of the vacuum instrument. Alternative procedures involving more rapid freezing and multiple cryogenic baths with different cooling properties (typically used to increase the speed of freezing to avoid crystalline structure formation in the sample fluid) are available and may be used provided the sample slide is kept optimally cooled during the procedure and the mounting of the sample to the sample holder is done under cryogenic conditions and the whole assembly is kept optimally cooled until final transfer under a dry gas environment into the vacuum.

The assembly of hinge and sample holder is shown in isometric view in Fig. 2 and in section in Fig. 3. The sample holder (23) is a heat-conductive metal block. A spring-loaded flipper bar (27) is mounted on a pin (26) and a release lever (21) retains this flipper bar.

The fracture mechanism is set and the complete sample holder and the hinge assembly is then promptly transferred from the cryogenic bath to the insertion lock of the instrument where it is placed on cold stage and the insertion lock is pumped down to UHV. A transfer probe is used to engage the sample and move it to the analysis chamber where it is mounted on a cryogenically cooled stage. In the process of engaging the sample, the probe is used to trigger the fracture mechanism. The probe, which can exert significant force, presses against the protrusion on the release lever (21), the release lever pivots and the spigot (38) pushes upward on the top plate (2) of the hinged sample plates at point (A). This causes the sample (44) to fracture in a place approximately parallel to the hinged plates. The release lever pivots further and releases the flipper bar (27). This flipper bar automatically opens the hinge to a preferred angle of 180 degrees, leaving both halves (45 & 46) of the sample (44) facing up and available for analysis as shown schematically in Fig. 4c. The spring and flipper bar also retains the upper plate firmly against the sample holder.

## Claims

1. An apparatus for the freeze-fracture and presentation for surface analysis in a SIMS instrument, in a vacuum, of clean surfaces from frozen fluid containing material, the apparatus comprising:
a pair of sample plates ( 1,2 ) joined by a hinge pin (3 ) to form a hinge, said plates ( 1,2 ) being so disposed as to be able to face each other and to be capable of rotating about said hinge pin ( 3 ) with respect to each other;
and support means ( 23 ) for supporting said sample plates ( 1,2 ) for insertion into a vacuum system;
**characterised in that** said hinge is a floating hinge and the apparatus includes:
a spring-loaded bar ( 27 ) pivotally mounted on the support means ( 23 ), and
release means ( 21,38 ) mounted on the support means ( 23 ) for releasably retaining the spring-loaded bar ( 27 ) in a set position,
the release means ( 21,38 ) being triggerable, in use, from outside the vacuum system, whereby the release means ( 21,38 ) is caused to push on a sample plate ( 1,2 ) to mechanically prise the sample plates ( 1,2 ) apart causing sample to fracture, and to release the spring-loaded bar ( 27 ) from said set position,
the spring-loaded bar ( 27 ), released from the set position by the release means (21,38 ), acting to cause the prised-apart samples plates ( 1,2 ) to rotate with respect to each other through a predetermined rotation angle.

2. An apparatus as claimed in claim 1 wherein said release means ( 21,38 ) is triggerable, in use, by a mechanical device.

3. An apparatus as claimed in claim 2 wherein said mechanical device is a transfer probe.

4. An apparatus as claimed in claim 1 wherein said release means ( 21,38 ) is triggerable, in use, by an electrical or electromagnetic device.

5. An apparatus as claimed in any one of claims 1 to 4 wherein said predetermined rotation angle is in the range from 90° to 270°.

6. An apparatus as claimed in claim 5 wherein said rotation angle is substantially 180° so that the sample plates lie in substantially the same plane, with both recently-fractured sample surfaces facing substantially in the same direction.

7. An apparatus as claimed in any one of claims 1 to 6 wherein samples of varying thicknesses between 0.001mm and 2.5mm can be accommodated between the sample plates.

8. An apparatus as claimed in any one of claims 1 to 7 wherein either sample plate has a well or indent for containing sample.

9. An apparatus as claimed in any one of claims 1 to 8 wherein the sample plates are capable of accommodating multiple samples.

10. An apparatus as claimed in any one of claims 1 to 9 wherein the sample plates are capable of accommodating biological samples for analysis in a SIMS instrument.

11. An apparatus as claimed in any one of claims 1 to 9 wherein the sample plates are capable of accommodating biological samples for analysis in a surface analysis instrument.

12. A method for presentation of a frozen sample with minimised surface contamination and frosting for analysis using a surface analysis technique, the method being **characterised by** the steps of:
placing a sample between a pair of hinged sample plates comprising an upper and a lower plate of a freeze-fracture apparatus as claimed in claim 1,
applying pressure if required to ensure a good contact between the sample plate and the sample;
rapidly freezing the sample plates containing the sample between them in a cryogenic bath in a dry gas environment;
mounting the lower sample plate on the support means of said freeze-fracture apparatus that is already immersed in the cryogenic bath by means of screws or clamps;
setting the fracture mechanism, with the release means of the freeze-fracture apparatus releasably retaining the spring-loaded bar of the apparatus in the set position,
whilst still in a dry gas environment transferring the freeze-fracture apparatus to a cryogenically cooled stage in an insertion lock and placing it promptly under ultra high vacuum;
transferring the freeze-fracture apparatus to a second cryogenically cooled stage in the analysis position and;
freeze-cleaving the sample by triggering the release means of the freeze-fracture apparatus to separate the sample plates and opening them such that both freeze-cleaved surfaces are facing in a direction suitable for surface analysis, the release means being caused to push on a sample plate to mechanically prise the sample plates apart causing sample to fracture, and to release the spring-loaded bar from the set position.

13. A method for presentation of a frozen sample as claimed in claim 12 wherein the rapid freezing of the sample plates containing sample between them in a cryogenic bath takes place outside of a dry gas environment and whilst the freeze-fracture apparatus is still cooled in the cryogenic bath transferring them both to a dry gas environment.

14. A method for presentation of a frozen sample as claimed in claim 13 wherein the sample is any biological or biochemical material requiring freezing for surface analysis.

## Patentansprüche

1. Vorrichtung für den Gefrierbruch und die Darstellung von sauberen Oberflächen aus einem Material, das gefrorenes Fluid enthält, in einem SIMS-Instrument in einem Vakuum für die Oberflächenanalyse wobei die Vorrichtung umfasst:
zwei Probenplatten (1, 2), die mit einem Scharnierzapfen (3) verbunden sind, um ein Scharnier auszubilden, wobei die Platten (1, 2) derart angeordnet sind, dass sie einander zugewandt sein können und in der Lage sind, sich um den Scharnierzapfen (3) im Bezug zueinander zu drehen;
und Halteeinrichtungen (23) zum Halten der Probenplatten (1, 2) für das Einfügen in ein Vakuumsystem;
**dadurch gekennzeichnet, dass** das Scharnier ein frei bewegliches Scharnier ist und die Vorrichtung umfasst:
einen durch eine Feder vorgespannten Riegel (27), der Schwenkbar an der Halteeinrichtung (23) befestigt ist, und
eine Löseeinrichtung (21, 38), die an der Halteeinrichtung (23) befestigt ist, um den durch eine Feder vorgespannten Riegel (27) in einer festgestellten Stellung lösbar zu halten,
wobei die Löseeinrichtung (21, 38) in Verwendung von außerhalb des Vakuumsystems ausgelöst werden kann, wodurch die Löseeinrichtung (21, 38) veranlasst wird, auf eine Probenplatte (1, 2) zu drücken, um die Probenplatten (1, 2) mechanisch voneinander zu trennen, wodurch die Probe bricht, und den durch eine Feder vorgespannten Riegel (27) aus der festgestellten Stellung zu lösen, und
der durch eine Feder vorgespannte Riegel (27), der aus der festgestellten Stellung durch die Löseeinrichtung (21, 38) gelöst ist, derart wirkt, dass er die voneinander getrennten Probenplatten (1, 2) veranlasst, sich im Bezug zueinander um einen vorbestimmten Drehwinkel zu drehen.

2. Vorrichtung nach Anspruch 1, bei der die Löseeinrichtung (21, 38) in Verwendung durch eine mechanische Vorrichtung auslösbar ist.

3. Vorrichtung nach Anspruch 2, bei der die mechanische Vorrichtung eine Transfersonde ist.

4. Vorrichtung nach Anspruch 1, bei der die Löseeinrichtung (21, 38) in Verwendung durch eine elektrische oder elektromagnetische Vorrichtung auslösbar ist.

5. Vorrichtung nach einem der Ansprüche 1 bis 4, bei der der vorbestimmte Drehwinkel im Bereich zwischen 90° und 270° liegt.

6. Vorrichtung nach Anspruch 5, bei der der Dretiwinkel im wesentlichen 180° beträgt, so dass die Probenplatten im wesentlichen in derselben Ebene liegen, wobei beide zuvor gebrochenen Probenoberflächen im wesentlichen in dieselbe Richtung weisen.

7. Vorrichtung nach einem der Ansprüche 1 bis 6, bei der Proben unterschiedlicher Dicke zwischen 0,001 mm und 2,5 mm zwischen den Probenplatten aufgenommen werden können.

8. Vorrichtung nach einem der Ansprüche 1 bis 7, bei der jede Probenplatte eine Senke oder Vertiefung für die Aufnahme eine Probe hat.

9. Vorrichtung nach einem der Ansprüche 1 bis 8, bei der die Probenplatten in der Lage sind, mehrere Proben aufzunehmen.

10. Vorrichtung nach einem der Ansprüche 1 bis 9, bei der die Probenplatten in der Lage sind, biologische Proben für die Analyse in einem SIMS-Instrument aufzunehmen.

11. Vorrichtung nach einem der Ansprüche 1 bis 9, bei der die Probenplatten in der Lage sind, biologische Proben für die Analyse in einem Oberflächenanalyse-Instrument aufzunehmen.

12. Verfahren für die Darstellung einer gefrorenen Probe mit minimierter Oberflächenverunreinigung und Frieren für Analysezwecke unter Anwendung einer Oberflächenanalysetechnik, wobei das Verfahren durch folgende Schritte gekennzeichnet ist:
Plazieren einer Probe zwischen zwei gelenkig verbundenen Probenplatten einer Gefrierbruchvorrichtung nach Anspruch 1, die eine obere und eine untere Platte umfassen,
Ausüben von Druck, sofern dies erforderlich ist, um einen guten Kontakt zwischen der Probenplatte und der Probe sicherzustellen;
schnelles Gefrieren der Probenplatten, die zwischen sich die Probe enthalten, in einem kryogenen Bad in einer trockenen Gasumgebung;
Anbringen der unteren Probenplatte auf der Halteeinrichtung der Gefrierbruchvorrichtung, die bereits in das kryogene Bad getaucht ist, mit Hilfe von Schrauben oder Klemmen;
Feststellen des Bruchmechanismus, wobei die Löseeinrichtung der Gefrierbruchvorrichtung den durch eine Feder vorgespannten Riegel der Vorrichtung in der festgestellten Stellung lösbar hält;
während sie sich weiterhin in einer trockenen Gasumgebung befindet, Überführen der Gefrierbruchvorrichtung in eine kryogen gekühlte Phase in einem Einsatzverschluss und sofortiges Plazieren desselben in einem Ultrahochvakuum;
Überführen der Gefrierbruchvorrichtung in eine zweite kryogen gekühlte Phase in der Analyseposition und
Gefrierbrechen der Probe durch Auslösen der Löseeinrichtung der Gefrierbruchvorrichtung, um die Probenplatten zu trennen und diese derart zu öffnen, dass beide gefriergebrochenen Oberflächen in eine Richtung weisen, die sich für die Oberflächenanalyse eignet, wobei die Löseeinrichtung veranlasst wird, einen Druck auf die Probenplatte auszuüben, um die Probenplatten mechanisch voneinander zu trennen, wodurch ein Bruch der Probe bewirkt wird, und den durch eine Feder vorgespannten Riegel aus der festgestellten Stellung zu lösen.

13. Verfahren für die Darstellung einer gefrorenen Probe nach Anspruch 12, bei dem das schnelle Frieren der Probenplatten in einem kryogenen Bad, die zwischen sich die Probe enthalten, außerhalb einer trockenen Gasumgebung erfolgt, und während die Gefrierbruchvorrichtung weiterhin in dem kryogenen Bad gekühlt wird, beide Platten in eine trockene Gasumgebung überführt werden.

14. Verfahren für die Darstellung einer gefrorenen Probe nach Anspruch 13, bei dem die Probe ein beliebiges biologisches oder biochemisches Material ist, das ein Gefrieren für die Oberflächenanalyse erfordert.

## Revendications

1. Appareil pour la fracture d'axones congelés et la présentation pour l'analyse de surface, dans un instrument SIMS, sous vide, des surfaces propres à partir d'un matériau contenant du fluide congelé, l'appareil comprenant :
une paire de plaques d'échantillon (1, 2) assemblées par une cheville de charnière (3) afin de former une charnière, lesdites plaques (1, 2) étant disposées afin de pouvoir faire face et pouvoir tourner autour de ladite cheville de charnière (3) l'une par rapport à l'autre ;
et des moyens de support (23) pour supporter lesdites plaques d'échantillon (1, 2) pour l'insertion dans un système sous vide ;
**caractérisé en ce que** ladite charnière est une charnière flottante et l'appareil comprend :
une barre à ressort (27) montée de manière pivotante sur les moyens de support (23), et
des moyens de libération (21, 38) montés sur les moyens de support (23) pour retenir de manière amovible la barre à ressort (27) dans une position déterminée,
des moyens de libération (21, 38) pouvant être déclenchés, à l'usage, depuis l'extérieur du système sous vide, moyennant quoi les moyens de libération (21, 38) sont amenés à pousser sur une plaque d'échantillon (1, 2) pour séparer mécaniquement les plaques d'échantillon (1, 2), provoquant la fracture de l'échantillon, et pour libérer la barre à ressort (27) de ladite position déterminée,
la barre à ressort (27), libérée de la position déterminée par les moyens de libération (21, 38), agissant pour amener les plaques d'échantillon (1, 2) séparées à tourner l'une par rapport à l'autre sur un angle de rotation prédéterminé.

2. Appareil selon la revendication 1, dans lequel lesdits moyens de libération (21, 38) peuvent être déclenchés, à l'usage, par un dispositif mécanique.

3. Appareil selon la revendication 2, dans lequel le dispositif mécanique est une sonde de transfert.

4. Appareil selon la revendication 1, dans lequel lesdits moyens de libération (21, 38) peuvent être déclenchés, à l'usage, par un dispositif électrique ou électromagnétique.

5. Appareil selon l'une quelconque des revendications 1 à 4, dans lequel ledit angle de rotation prédéterminé est de l'ordre de 90° à 270°.

6. Appareil selon la revendication 5, dans lequel ledit angle de rotation est sensiblement de 180° de sorte que les plaques d'échantillon sont sensiblement sur le même plan, avec les deux surfaces d'échantillon récemment fracturées orientées sensiblement dans la même direction.

7. Appareil selon l'une quelconque des revendications 1 à 6, dans lequel les échantillons d'épaisseurs variables comprises entre 0,001 mm et 2,5 mm peuvent être logés entre les plaques d'échantillon.

8. Appareil selon l'une quelconque des revendications 1 à 7, dans lequel chaque plaque d'échantillon a un puits ou indentation pour contenir l'échantillon.

9. Appareil selon l'une quelconque des revendications 1 à 8, dans lequel les plaques d'échantillon peuvent loger plusieurs échantillons.

10. Appareil selon l'une quelconque des revendications 1 à 9, dans lequel les plaques d'échantillon peuvent loger des échantillons biologiques pour être analysés dans un instrument SIMS.

11. Appareil selon l'une quelconque des revendications 1 à 9, dans lequel les plaques d'échantillon peuvent loger des échantillons biologiques pour être analysés dans un instrument d'analyse de surface.

12. Procédé pour la présentation d'un échantillon congelé avec une contamination de surface minimisée, et la congélation pour l'analyse en utilisant une technique d'analyse de surface, le procédé étant **caractérisé par** les étapes consistant à :
placer un échantillon entre une paire de plaques d'échantillon articulées comprenant une plaque supérieure et une plaque inférieure d'un appareil de fracture d'axones congelés selon la revendication 1,
appliquer la pression, si nécessaire, pour garantir un bon contact entre la plaque d'échantillon et l'échantillon ;
congeler rapidement les plaques d'échantillon contenant l'échantillon entre elles dans un bain cryogénique dans un environnement de gaz sec ;
monter la plaque d'échantillon inférieure sur les moyens de support dudit appareil de fracture d'axones congelés qui est déjà immergé dans le bain cryogénique au moyen de vis ou de pinces ;
placer le mécanisme de fracture, avec les moyens de libération de l'appareil de fracture d'axones congelés retenant de manière amovible la barre à ressort de l'appareil dans la position déterminée,
tout en étant encore dans l'environnement de gaz sec, transférer l'appareil de fracture d'axones congelés dans un étage refroidi de manière cryogénique dans un verrou d'insertion et le placer immédiatement sous vide ultra élevé ;
transférer l'appareil de fracture d'axones congelés dans un second étage refroidi de manière cryogénique dans la position d'analyse ; et
cryodécaper l'échantillon en déclenchant les moyens de libération de l'appareil de fracture d'axones congelés pour séparer les plaques d'échantillon et les ouvrir de sorte que les deux surfaces cryodécapées sont orientées dans une direction appropriée pour l'analyse de surface, les moyens de libération étant amenés à pousser sur une plaque d'échantillon pour séparer mécaniquement les plaques d'échantillon, provoquant la fracture de l'échantillon et la libération de la barre à ressort de la position déterminée.

13. Procédé pour la présentation d'un échantillon congelé selon la revendication 12, dans lequel la congélation rapide des plaques d'échantillon contenant l'échantillon entre elles dans un bain cryogénique a lieu à l'extérieur d'un environnement de gaz sec et alors que l'appareil de fracture d'axones congelés est encore refroidi dans le bain cryogénique, les transférer toutes deux dans un environnement de gaz sec.

14. Procédé pour la présentation d'un échantillon congelé selon la revendication 13, dans lequel l'échantillon est l'un quelconque d'une matière biologique ou biochimique nécessitant la congélation pour l'analyse de surface.
